# FASCICULE DE BREVET EUROPEEN

(11) **EP 1 804 399 B1**
(45) Date de publication et mention de la délivrance du brevet: **12.02.2014**
(21) Numéro de dépôt: 05301125.0
(22) Date de dépôt: 30.12.2005
(51) Int. Cl.: H04B 7/26

(54) **Procédé de synchronisation de stations de base d'un réseau de communication céllulaire terrestre**
Verfahren zur Synchronisierung von Basisstationen eines terrestrischen zellularen Kommunikationsnetzes
Method for synchronising base stations of a terrestrial-cellular communication network

(43) Date de publication de la demande: 04.07.2007
(73) Titulaire: Alcatel Lucent, 75007 Paris (FR)
(72) Inventeur: Monnerat, Michel, 31240 L'Union (FR); Masson, Arnaud, 31170 Tournefeuille (FR)
(74) Mandataire: Sciaux, Edmond

(56) Documents cités:
- EP-A- 1 411 648
- WO-A-01/20818

## Description

La présente invention concerne un procédé de synchronisation des stations de base d'un système de communication cellulaire terrestre grâce à l'utilisation d'une composante satellitaire. L'objectif recherché par la synchronisation des stations de base est la localisation ou l'aide à la localisation des terminaux dudit système de communications. La synchronisation pouvant être mise à profit dans l'utilisation de techniques d'aides au positionnement par satellites ou pouvant être mise à profit par triangulation de mesures effectuées directement sur les signaux émis par les stations de bases.

Dans un système de positionnement par satellites utilisant des récepteurs du type GNSS ("Global Navigation Satellite System") tels qu'un récepteur GPS ou Galileo, les signaux de données permettant au récepteur de calculer son positionnement proviennent de différents satellites (quatre au minimum pour déterminer les quatre inconnues x,y,z et t). Il est bien connu par l'homme de métier que le positionnement par un tel système suppose au préalable deux types de traitement au niveau du récepteur.

Le premier consiste à acquérir le signal provenant d'au moins quatre satellites, le second consiste à évaluer la distance séparant le récepteur des satellites dont le signal a été reçu. L'interface entre un système de navigation par satellites (RNSS pour "Radio Navigation Satellite System") et le récepteur utilisateur repose sur un signal radio électrique, lui même reposant sur une technique de spectre étalé, bien connue de l'homme de l'art. Les techniques de spectre étalé, dans leur forme les plus courantes telle que sur le GPS code C/A, Galileo F/Nav, reposent sur l'utilisation d'un code pseudo aléatoire périodique. Dans le cadre du GPS, ce code possède une période de 1 milliseconde (ms). Ce code se rajoute à un message de navigation numérique, ce message comportant un certain nombre d'informations nécessaires au calcul de la position du récepteur, typiquement :
- Référence horaire, bien connue sur GPS sous le nom de TOW ("Time of Week") correspondant à l'heure d'émission du message,
- La position du satellite au moment de l'envoi du message, bien connue sur GPS sous le nom d'éphémérides,
- Certaines corrections à apporter sur l'horloge bord du satellite, bien connues sur GPS sous le nom de "clock corrections" (corrections d'horloge en anglais), visant à corriger la Référence horaire par rapport à l'horloge globale du système,
- Certains paramètres de correction de propagation, tels que des paramètres de corrections de vitesse de propagation des ondes électromagnétiques dans les couches de l'atmosphère (en particulier la ionosphère),
- La position approximative des autres satellites de la constellation via des données dites d'almanachs.

Le débit des données est bien entendu plus lent que le débit du code d'étalement périodique. Typiquement sur le signal GPS SPS (GPS Satellite Positioning System), le débit de données s'élève à 50 bits par seconde, alors que celui du code est de 1,023 millions de bribes par seconde. Un code complet étant constitué de 1023 bribes (soit 1ms). L'ensemble des données ajoutées modulo 2 au code d'étalement est transmis sur une porteuse. Typiquement sur GPS, la porteuse se trouve à 1,57542 GHz.

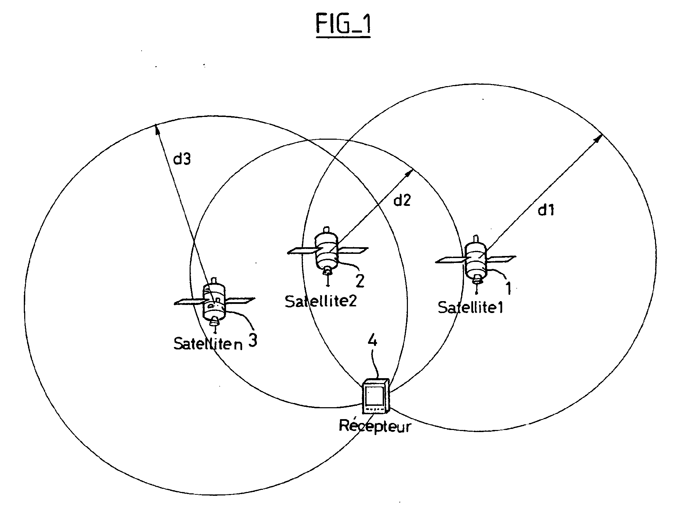

La détermination de la position du récepteur est représentée en figure 1. Le principe consiste pour un récepteur [4] à déterminer la distance le séparant d'au moins trois satellites de la constellation référencée par des satellites [1], [2] et [3] (trois satellites pour une localisation en deux dimensions et quatre satellites pour une localisation en trois dimensions). Une fois déterminées ces distances [d1], [d2] et [d3], le récepteur peut déterminer sa position à l'intersection des sphères dont le centre est matérialisé par la position de chacun des satellites eux-mêmes et dont le rayon est fourni par la distance [di]. La mesure de distance se fait par chronométrage de temps d'arrivée d'un signal radio électrique provenant du satellite. Il s'ensuit que les informations essentielles provenant du satellite via le message de navigation et que doit traiter le récepteur sont constituées par le couple (date d'émission, position du satellite au moment de l'émission). Le satellite transmet dans son message de navigation ses éphémérides (paramètres Képleriens) permettant au récepteur de calculer la position du satellite dans un référentiel lié à la terre. Les éphémérides sont constituées dans le cas de GPS de 16 paramètres.

| | |
|---|---|
| M0 | Anomalie Moyenne |
| Dn | Déplacement Moyen |
| E | Excentricité |
| (A)1/2 | Racine du demi grand axe |
| OMEGA 0 | Longitude du noeud ascendant |
| I0 | Inclinaison |
| W | Argument de périgée |
| OMEGA DOT | Dérivée temporelle de l'ascension droite |
| I DOT | Dérivée temporelle de l'inclinaison |
| Cuc | Amplitude cosinus de l'harmonique du terme de correction de l'argument de latitude |
| Cus | Amplitude sinus de l'harmonique du terme de correction de l'argument de latitude |
| Crc | Amplitude cosinus de l'harmonique du terme de correction du rayon de l'orbite |
| Crs | Amplitude sinus de l'harmonique du terme de correction du rayon de l'orbite |
| Cic | Amplitude cosinus de l'harmonique du terme de correction de l'angle d'inclinaison |
| Cis | Amplitude sinus de l'harmonique du terme de correction de l'angle d'inclinaison |

Ces paramètres sont répétés toutes les 30 secondes dans le message de navigation.

La position du satellite étant obtenue, il reste au récepteur à détecter l'heure d'émission du message afin de déduire le temps de propagation de l'onde et par suite la distance le séparant du satellite, et ainsi le rayon d'une des trois sphères nécessaires. Comme indiqué précédemment, l'heure fait aussi partie du contenu du message de navigation diffusé par le satellite. Cette heure est répétée toutes les 6 secondes. Cependant, il convient d'appliquer à l'heure lue dans le message de navigation une correction d'horloge satellitaire afin de ramener l'heure transmise dans une référence système commune à tous les satellites. Cette correction est, quant à elle, transmise toutes les 30 secondes.

En conclusion, il apparaît clairement qu'un récepteur ne peut être en mesure de déterminer sa position qu'au bout d'un temps minimum de 30 secondes après avoir acquis le signal. L'acquisition du signal s'entend par la toute première opération à effectuer par le récepteur, qui lui permet de se synchroniser fréquentiellement et temporellement sur les trains de bits transmis, phase essentielle pour la démodulation du message de navigation. L'acquisition consiste pour le récepteur à effectuer une recherche en temps-fréquence de l'énergie du signal provenant du satellite. L'accrochage fréquentiel sur le signal du satellite consiste pour le récepteur à s'accorder sur la fréquence à laquelle le signal du satellite est reçu. Le récepteur possède trois incertitudes le conduisant à effectuer cette recherche :
- Effet Doppler lié à la mobilité du satellite,
- Effet Doppler lié à la mobilité de l'utilisateur,
- Incertitude liée à la précision de l'horloge récepteur.

L'accrochage temporel consiste, pour le récepteur, à identifier une transition de code du signal reçu. Le code d'étalement dans le cas du GPS étant périodique de période d'1 ms, la recherche temporelle s'effectue sur un horizon d'1 ms. Une fois la transition de code identifiée, il est connu par l'homme de l'art comment identifier une transition bit puis la synchronisation trame diffusée dans le message de navigation.

Cette recherche temps-fréquence est très coûteuse en termes de complexité du récepteur et limite d'autant plus la performance du récepteur.

En résumé, le temps mis par un récepteur pour fournir une première position est contraint par une première phase très coûteuse de recherche de synchronisation temps-fréquence mais aussi par la lecture d'informations élémentaires sur le signal de navigation (supérieur à 30s).

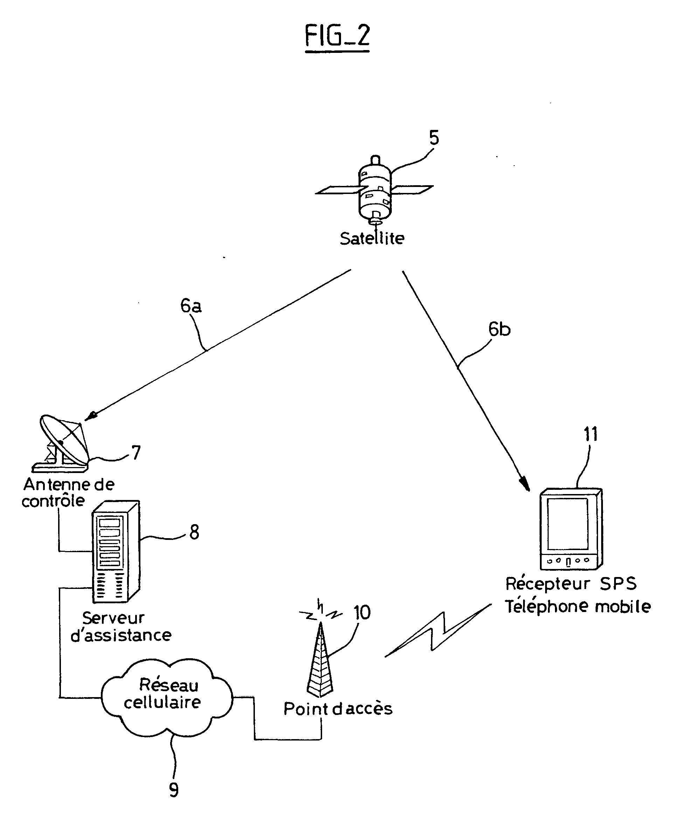

La méthode connue de l'homme de l'art pour palier ce problème est connue sous le nom de GPS Assisté ou GNSS assisté. Cette méthode consiste à coupler un système de télécommunication cellulaire et un récepteur de signaux de navigation par satellites. Ce procédé est décrit en figure 2. Il suppose que le récepteur de signaux de navigation par satellite soit couplé à un récepteur de télécommunication cellulaire [11] (terminal). Un équipement du réseau communément appelé serveur de données d'assistance [8] écoute en permanence les satellites de la constellation satellitaire via un signal radioélectrique [6a] et une antenne de contrôle référencée [7]. Les informations du message de navigation de chaque satellite sont alors stockées par le serveur [8]. Lorsque le récepteur [11] recherche sa position, il requiert un certain nombre de données d'assistance via une communication par une station de base [10] du réseau cellulaire [9] vers le serveur de données d'assistance. Les données d'assistance sont alors renvoyées par le serveur [8], vers le récepteur [11] via la station de base [10]. Ces données d'assistance facilite le traitement du signal [6b] reçu par le récepteur [11] provenant du satellite [5], et confère au récepteur une performance accrue, entre autres, en termes de temps de calcul. En effet, les données d'assistance peuvent être du type suivant :
- Contenu du message de navigation diffusé dans les signaux [6b] et [6a]. Le contenu est renvoyé avec un débit bien plus grand que le débit du message de navigation. Les temps mis pour acheminer les données essentielles à la détermination de la position passe ainsi de 30 secondes à 1 à 2 secondes.
- Une pré localisation du récepteur [11]. En effet, le récepteur [11] étant connecté à la station de base [10], le serveur [8] est en mesure de savoir que le récepteur se trouve dans le voisinage de la station de base [10]. Typiquement, dans un réseau de type GSM, la dimension des cellules est inférieure à 35km.
- Une référence horaire. Le serveur [8] recevant les données du satellite [5], est en mesure de connaître l'heure du système satellitaire et par suite de la diffuser au récepteur [11]. La plupart des réseaux de communication cellulaire étant asynchrones, la référence horaire transmise ne peut atteindre une précision que de l'ordre de 2 à 3 secondes.
- Différents types de corrections : corrections de vitesse de propagation, correction d'horloge bord du satellite, correction de propagation locale, etc.

La connaissance d'une pré-localisation, des éphémérides des satellites et d'une référence horaire approximative permet au récepteur de calculer l'effet Doppler des satellites en vue, diminuant grandement l'incertitude fréquentielle à balayer lors de la phase d'acquisition. De même, les éphémérides des satellites étant connues via la communication avec le serveur [8], il devient inutile pour le récepteur [11] de démoduler ces données sur le message de navigation [6b], ce qui élimine la contrainte de 30 secondes mise en évidence précédemment pour calculer la position. Il suffit alors au récepteur de déterminer un événement horaire sur le signal du satellite [6b], soit, en d'autres termes, de trouver la transition de code d'étalement puis l'heure transmise, le TOW sur le signal GPS qui passe toutes les 6 secondes. Il apparaît ainsi clairement un gain de performance notable, tant en ce qui concerne le temps nécessaire au calcul d'un point de localisation qu'en ce qui concerne la sensibilité. On entend par sensibilité, la puissance minimum du signal reçu par le récepteur lui permettant un traitement adéquat.

L'exemple d'assistance est donnée dans un réseau cellulaire de type GSM, il va de soi qu'il peut être étendu à d'autres systèmes tels que des systèmes de type WIFI, WIMAX.

L'ensemble de ces systèmes de communications sont asynchrones, c'est à dire que les stations de bases ou point d'accès ne possèdent pas une même référence horaire, bien qu'ayant une horloge très stable, à savoir 5.10⁻⁹ pour la norme GSM ("Global System for Mobile communications" en anglais). Comme indiqué précédemment, il est très difficile à un équipement du réseau de communication de fournir une assistance horaire précise à un terminal comprenant un récepteur GNSS couplé à un émetteur-récepteur de télécommunication. On entend par "précis" une précision de temps inférieure à la milliseconde, permettant au terminal de trouver plus aisément une transition de code sur le signal satellitaire sans ambiguïté.

Par ailleurs, l'asynchronisme des stations de base empêche l'utilisation de techniques de triangulation sur les signaux de télécommunication, bien connues par l'homme de l'art sous le nom de TOA ("Time of Arrival") ou EOTD ("Enhanced Observed Time Difference"). Ces techniques consistent à calquer la méthode de localisation employée sur les systèmes satellitaires de type GPS en remplaçant les satellites par les stations de base. La différence majeure réside donc justement dans le fait que les satellites GPS sont synchrones alors que les stations de base terrestres ne le sont pas, rendant inabouties et impossibles les techniques employées sans une modification indispensable du réseau de télécommunication cellulaire.

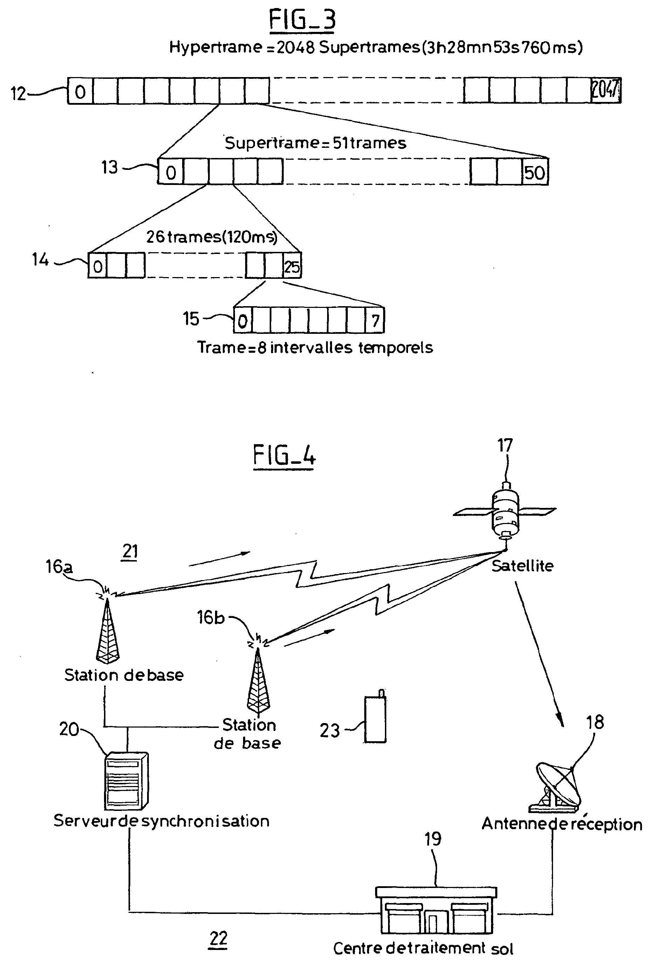

Une solution consiste à équiper chaque point d'accès avec un dispositif GNSS ou GPS capable de renvoyer à l'équipement du réseau l'offset de temps (décalage temporel) entre la station de base et le système de localisation par satellites. Cette méthode revient à équiper le réseau de télécommunications avec des unités de mesures de localisation connues sous l'appellation de "LMU" (pour "Location Measurement Unit" en anglais). Il est connu qu'un tel dispositif, en plus de calculer sa position, détermine une information horaire avec une précision inférieure à la nanoseconde. Cette information du dispositif est alors utilisée pour dater le début des trames émises par la station de base que le dispositif de référence équipe. En effet, le système de trames transmises par une station de base est très régulier et obéit, selon la norme GSM, à la représentation donné en figure 3. Le message est en effet constitué d'une succession ininterrompue d'hypertrames [12], elles-mêmes constituées de supertrames [13], elles-mêmes constituées de trames [14] puis d'intervalles temporels ou timeslots [15]. Cette succession régulière permet de définir des canaux logiques utilisés par chacun des terminaux et des services du réseau de communication cellulaire. Il s'ensuit également que la structure de trames, associée au fait que les horloges des stations de base sont extrêmement précises et régulières, fournit une information temporelle stable et utilisable du moment qu'un des évènements de changement de trames est repéré par rapport à une référence temporelle universelle telle que celle fournie par un système GNSS ou GPS. Dans le système décrit ci-dessus basé sur l'utilisation d'unités LMU, le dispositif GPS ou GNSS équipant la station de base remplit précisément cette fonction de fourniture d'une référence temporelle universelle. L'information étant centralisée par un équipement du réseau, elle peut être utilisée pour fournir à un terminal du réseau de communication une information temporelle extrêmement précise, de l'ordre de la nanoseconde.

Cette solution est extrêmement onéreuse du fait du coût de déploiement ainsi que du coût de maintenance d'un tel système.

Par ailleurs, le document EP 1 411 648 décrit un procédé de synchronisation dans lequel il est émis un mot de synchronisation entre un émetteur et un récepteur.

L'invention a donc pour but de remédier aux inconvénients ci-dessus mentionnés.

A cet effet, l'invention a pour objet un procédé de synchronisation de stations de base d'un réseau de télécommunications cellulaires terrestre, le réseau comportant au moins une première et une seconde stations de base asynchrones,
caractérisé en ce que le procédé comporte les étapes suivantes:
- une étape d'émission par lesdites première et seconde stations de base, en direction d'un satellite de télécommunications, d'un premier message, respectivement d'un second message, comportant respectivement un premier mot de synchronisation trames, respectivement un second mot de synchronisation trames,
- une étape de retransmission par le satellite vers un dispositif de traitement au sol desdits premier et second messages, le satellite et le dispositif de traitement étant synchrone d'un système de temps de référence du type GPS,
   les étapes suivantes étant réalisées au sein du dispositif de traitement :

- une étape de recherche du premier mot de synchronisation trame émis dans le message par la première station de base,
- une étape de recherche du second mot de synchronisation trame émis dans le message par la seconde station de base,
- une étape de datation apparente *T*_{16*a-*Re*ception*} du premier mot de synchronisation, et de datation apparente *T*_{16*b-*Re *ception*} du second mot de synchronisation,
- une étape de calcul de la distance entre la première station de base et le satellite, le dispositif de traitement connaissant la position de la première station de base et la position du satellite,
- une étape de calcul de la distance entre la seconde station de base et le satellite, le dispositif de traitement connaissant la position de la seconde station de base et la position du satellite,
- une étape de calcul, par déduction de la distance calculée entre la première station de base et le satellite, du temps d'acheminement *T*_{16*a-Ache* min *ement*} vers le satellite du premier mot de synchronisation, et de calcul, par déduction de la distance calculée entre la seconde station de base et le satellite, du temps d'acheminement *T*_{16*b-Ache* min *ement*} du second mot de synchronisation,
- une étape de calcul de datation réelle du premier mot de synchronisation et de datation réelle du second mot de synchronisation, respectivement selon la formule *T*₁₆*ₐ = T*_{16*a*-Re*ception*} - *T*_{16*a*-*Ache* min *ement*}, et *T*₁₆*_{b} = T*_{16*b-*Re} *_{ception}- T*_{16*b-Ache* min *ement*},
- une étape de transmission d'une information tenant compte desdites datations réelles vers un dispositif de synchronisation du réseau de télécommunications cellulaires.

Selon un mode de réalisation, le procédé selon l'invention comporte une étape de transmission, par le dispositif de synchronisation du réseau de télécommunications cellulaires vers un terminal, de l'information tenant compte desdites datations réelles entre les stations de base visibles depuis le terminal, lui permettant d'effectuer une triangulation sur les signaux émanant de ces stations de base.

D'autres caractéristiques et avantages de l'invention apparaîtront plus clairement à la lecture, non limitative, de la description suivante des exemples particulier de réalisation de l'invention en référence aux figures suivantes :
- la figure 1, déjà décrite, représente la méthode connue de détermination de la position d'un récepteur par GPS,
- la figure 2, déjà décrite, représente la méthode connue de localisation par GPS Assisté ou GNSS assisté,
- la figure 3 représente le système de trames dans la norme GSM,
- la figure 4 représente un mode de réalisation du système selon l'invention.

La figure 4 illustre un mode de réalisation d'un système [22] de synchronisation de stations de base selon l'invention :
L'invention consiste à déterminer l'offset entre différentes stations de base du réseau [21] de communication cellulaire et un élément externe, ce dernier étant un satellite [17] en charge d'"écouter" le signal provenant des différentes stations de base en vue comme indiqué sur la figure 4. Ainsi, le satellite [17] écoute les signaux émis des stations de bases [16a] et [16b]. Les signaux sont retransmis (et ceci pouvant se faire de manière transparente, i.e. sans aucun traitement à bord du satellite) vers l'antenne de réception satellitaire [18] accordée sur la fréquence de retransmission du satellite [17]. Ces signaux sont alors traitées par un dispositif de traitement [19] au sol (illustré par un centre de traitement sol). L'ensemble composé des éléments {[17], [18], [19]} est synchrone d'un système de temps de référence comme par exemple le GPS. Le procédé mis en oeuvre selon le mode de réalisation de l'invention est alors le suivant :
   - Recherche d'un mot de synchronisation trame émis dans le signal par la station de base [16a],
   - Recherche d'un mot de synchronisation trame émis dans le signal par la station de base [16b]
   - Datation apparente *T*_{16a*-*Re *ception*} du mot de synchronisation provenant de la station de base [16a], et datation apparente *T*_{16*b-*Re*ception*} du mot de synchronisation provenant de la station de base [16b],
   - Calcul de la distance entre la station de base [16a] et le satellite [17]. Ce calcul suppose que le dispositif de traitement [19] ait connaissance de la position de la station de base [16a] et de la position du satellite [17].
   - Calcul de la distance entre la station de base [16b] et le satellite [17]. De façon identique à ce qui a été expliqué ci-dessus, ce calcul suppose que le dispositif de traitement [19] ait connaissance de la position de la station de base [16b] et de la position du satellite [17].
   - Calcul, par déduction de la distance calculée entre la station de base [16a] et le satellite [17], du temps d'acheminement *T*_{16*a-Ache*min*ement*} vers le satellite [17] du mot de synchronisation [16a], et calcul, par déduction de la distance calculée entre la station de base [16b] et le satellite [17], du temps d'acheminement *T*_{16*b-Ache*min*ement*} du mot de synchronisation [16b],.
   - Calcul de la datation réelle du mot de synchronisation [16a] et de la datation réelle du mot de synchronisation [16b], respectivement *T*₁₆ₐ = *T*_{16*a-*Re*ception*} - *T*_{16*a-Ache* min} *ₑₘₑₙₜ,* et *T*_{16*b*} = *T*_{16*b-*Re*ception*} - *T*_{16*b-Ache* min *ement*}
   - Transmission d'une information tenant compte desdites datations réelles vers un serveur [20] de synchronisation du réseau de télécommunications cellulaires.
Le serveur [20] dispose alors d'une information temporelle absolue de chaque station de base vue depuis le satellites.

Une étape essentielle dans l'invention repose sur la détermination de la date de réception d'un mot de synchronisation provenant d'une station de base. Pour chaque station de base, il est affecté un canal de synchronisation. Sur ce canal de synchronisation est émis, de manière répétitive, un mot de synchronisation trame ainsi que l'identifiant de la station de base concernée. Ces informations sont utilisées par le système satellitaire : 1) pour déterminer une date de synchronisation, grâce au mot de synchronisation trame, 2) pour discriminer les stations de base entre elles, grâce à l'identifiant de la station de base lui même.

Il est à noter que l'invention peut également tirer partie du fait que le procédé selon l'invention fait appel à une étape de traitement au niveau du dispositif de traitement [19]. Les messages de communication eux-mêmes peuvent alors être utilisés pour déterminer une date de synchronisation correspondant à une station de base donnée mais aussi pour déterminer l'identité de la station de base. Une corrélation entre les messages de communication transmis et connus a posteriori et les messages enregistrés par le satellite [17] peut être effectuée pour trouver un point de synchronisation dans le signal venant d'une station de base donnée. Les signaux émis par les stations de base [16a] et [16b] (messages de communications transmis par les stations de base) peuvent être acheminés par un lien terrestre vers le centre [19] qui corrèle alors lesdits messages avec les signaux reçus par le satellite [17].

En supposant que l'ensemble {satellite [17], antenne [18], centre de traitement sol [19]} ne possède pas de référence horaire externe telle que celle fournie par le GPS, le traitement mis en oeuvre par le centre de traitement [19] est le suivant :
- Recherche d'un mot de synchronisation trames émis dans le signal par la station de base [16a] vers le centre [19],
- Recherche d'un mot de synchronisation trames émis dans le signal par la station de base [16b] vers le centre [19],
- Calcul, par déduction des deux mots de synchronisation précédemment trouvés, de la différence de temps ΔT_{Re*ception*} entre l'apparition du mot de synchronisation trames [16a] et l'apparition du mot de synchronisation trames [16b],
- Calcul de la distance entre la station de base [16a] et le satellite [17]. Ce calcul suppose que le dispositif de traitement [19] connaisse la position de la station de base [16a] et la position du satellite [17].
- Calcul de la distance entre la station de base [16b] et le satellite [17]. Ce calcul suppose que le dispositif de traitement [19] connaisse la position de la station de base [16b] et la position du satellite [17].
- Calcul, par déduction entre les deux précédents calculs, de la différence de temps d'acheminement Δ*T*_{*che*min} vers le satellite [17] entre le mot de synchronisation [16a] et le mot de synchronisation [16b],
- Calcul de l'offset de temps entre la station de base [16a] et la station de base [16b], *ΔT*_{16*a-*16*b*} = *ΔT_{reception} - Δ T*_{*che*min}
- Transmission de l'information *ΔT*_{16*a-*16*b*} vers le serveur [20] de synchronisation du réseau de communications cellulaires

Le serveur de synchronisation [20] est alors en mesure de transmettre au terminaux du réseau de communications cellulaires une information d'offset de synchronisation entre les stations de base visibles depuis le terminal, ce qui lui permet d'effectuer une triangulation sur ces mêmes signaux.

Il est à noter que dans le système décrit ci-dessus, les émissions des stations de base [16a] et [16b] arrivent très atténuées vers le satellite du fait de la distance séparant ces stations de base et le satellite. Ces émissions peuvent également se brouiller car elles utilisent les mêmes fréquences. Cependant, la corrélation faite au niveau du centre de traitement [19] tire partie du fait que le mot de synchronisation ainsi que l'Identité de la station de base sont répétés de manière régulière. Le centre de traitement [19] peut alors corréler le signal composite retransmis par le satellite [17] sur plusieurs périodes de manière à augmenter le rapport signal à bruit après corrélation et à discriminer de manière non ambiguë l'identité et la synchronisation de la station de base. Bien évidemment, dans le cas où le centre de traitement [19] corrèlerait directement le signal composite retransmis par le satellite [17] avec une bribe de message de communication transmis par la station de base, plus la bribe est longue, plus le pouvoir discriminateur est élevé.

## Revendications

1. Procédé de synchronisation de stations de base (16a,16b) d'un réseau (21) de télécommunications cellulaires terrestre, le réseau comportant au moins une première et une seconde stations de base (16a,16b) asynchrones, **caractérisé en ce que** le procédé comporte les étapes suivantes :
- une étape d'émission par lesdites première et seconde stations de base (16a,16b), en direction d'un satellite (17) de télécommunications, d'un premier message, respectivement d'un second message, comportant respectivement un premier mot de synchronisation trames, respectivement un second mot de synchronisation trames,
- une étape de retransmission par le satellite vers un dispositif (19) de traitement au sol desdits premier et second messages, le satellite et le dispositif de traitement étant synchrone d'un système (GPS) de temps de référence,
les étapes suivantes étant réalisées au sein du dispositif de traitement :
- une étape de recherche du premier mot de synchronisation trame émis dans le message par la première station de base (16a),
- une étape de recherche du second mot de synchronisation trame émis dans le message par la seconde station de base (16b),
- une étape de datation apparente T_{16*a*-Re*ception*} du premier mot de synchronisation, et de datation apparente T_{16*b*-Re*ception*} du second mot de synchronisation,
- une étape de calcul de la distance entre la première station de base (16a) et le satellite (17), le dispositif de traitement (19) connaissant la position de la première station de base [16a] et la position du satellite (17),
- une étape de calcul de la distance entre la seconde station de base (16b) et le satellite (17), le dispositif de traitement (19) connaissant la position de la seconde station de base (16a) et la position du satellite (17),
- une étape de calcul, par déduction de la distance calculée entre la première station de base (16a) et le satellite (17), du temps d'acheminement T_{16*a*-A*che* min *ement*} vers le satellite (17) du premier mot de synchronisation (16a), et de calcul, par déduction de la distance calculée entre la seconde station de base (16b) et le satellite (17), du temps d'acheminement *T*_{16*b*-*Ache* min *ement*} du second mot de synchronisation (16b),
- une étape de calcul de datation réelle du premier mot de synchronisation (16a) et de datation réelle du second mot de synchronisation (16b), respectivement selon la formule *T*_{16*a*} = T_{16*a*-Re*ception*} - *T*_{16*a*-*Ache* min *ement*} et *T*₁₆*_{b} =* T_{16*b*-Re*ception*} - T_{16*b*-A*che* min *ement*},
- une étape de transmission d'une information tenant compte desdites datations réelles vers un dispositif (20) de synchronisation du réseau de télécommunications cellulaires.

2. Procédé selon la revendication 1, **caractérisé en ce qu'**il comporte une étape de transmission, par le dispositif (20) de synchronisation du réseau de télécommunications cellulaires vers un terminal (23), de l'information tenant compte desdites datations réelles entre les stations de base visibles (16a, 16b) depuis le terminal, lui permettant d'effectuer une triangulation sur les signaux émanant de ces stations de base.

## Patentansprüche

1. Verfahren zur Synchronisation von Basisstationen (16a, 16b) eines terrestrischen zellularen Telekommunikationsnetzwerks (21), wobei das Netzwerk mindestens eine erste und eine zweite Basisstation (16a, 16b) umfasst, welche asynchron zueinander angeordnet sind, **dadurch gekennzeichnet, dass** das Verfahren die folgenden Schritte umfasst:
- einen Schritt des Ausgebens, durch die besagte erste und die besagte zweite Basisstation (16a, 16b), einer ersten Nachricht bzw. einer zweiten Nachricht, welche jeweils ein erstes Rahmen-Synchronisationswort bzw. ein zweites Rahmen-Synchronisationswort enthalten, in Richtung eines Telekommunikationssatelliten (17),
- einen Schritt des Weiterleitens, durch den Satelliten, der besagten ersten und der besagten zweiten Nachricht an eine Vorrichtung (19) zur Verarbeitung am Boden, wobei der Satellit und die Verarbeitungsvorrichtung mit einem Referenzzeit-System (GPS) synchron sind,
wobei die folgenden Schritte innerhalb der Verarbeitungsvorrichtung durchgeführt werden:
- ein Schritt des Ermittelns des in der von der ersten Basisstation (16a) ausgegebenen Nachricht enthaltenen ersten Rahrnan-Synahranisationsworts,
- ein Schritt des Ermittelns des in der von der zweiten Basisstation (16b) ausgegebenen Nachricht enthaltenen zweiten Rahmen-Synchronisationsworts,
- ein Schritt des anscheinenden Datierens T_{16a-Reception} des ersten Synchronisationswortes und des anscheinenden Datierens T_{16b-Reception} des zweiten Synchronisationswortes,
- ein Schritt des Berechnens der Entfernung zwischen der ersten Basisstation (16a) und dem Satelliten (17), wobei die Verarbeitungsvorrichtung (19) die Position der ersten Basisstation (16a) und die Position des Satelliten (17) kennt,
- ein Schritt des Berechnens der Entfernung zwischen der zweiten Basisstation (16b) und dem Satelliten (17), wobei die Verarbeitungsvorrichtung (19) die Position der zweiten Basisstation (16b) und die Position des Satelliten (17) kennt,
- ein Schritt des Berechnens, durch Ableiten von der berechneten Entfernung zwischen der ersten Basisstation (16a) und dem Satelliten (17), der Beförderungszeit T_{16a-Acheminement} des ersten Synchronisationswortes (16a) bis zum Satelliten (17), und des Berechnens, durch Ableiten von der berechneten Entfernung zwischen der zweiten Basisstation (16b) und dem Satelliten (17), der Beförderungszeit T_{16b- Acheminement} des zweiten Synchronisationswortes (16b),
- ein Schritt des Berechnens der reellen Datierung des ersten Synchronisationswortes (16a) und der reellen Datierung des zweiten Synchronisationswortes (16b), jeweils gemäß der Formel T₁₆ₐ = T_{16a-Reception -} T_{16a-Acheminement}, bzw. T_{16b} = T_{16b-Reception} - T_{16b-Acheminement},
- ein Schritt des Übertragens einer Information, welche die besagten reellen Datierungen berücksichtigt, an eine Vorrichtung (20) zur Synchronisation des zellularen Telekommunikationsnetzwerks.

2. Verfahren nach Anspruch 1, **dadurch gekennzeichnet, dass** es einen Schritt des Übertragens, durch die Vorrichtung (20) zur Synchronisation des zellularen Telekommunikationsnetzwerks an ein Endgerät (23), der Information, welche die besagten reellen Datierungen zwischen den vom Endgerät aus sichtbaren Basisstationen (16a, 16b) berücksichtigt, um es ihm zu ermöglichen, eine Triangulation auf den von diesen Basisstationen ausgegebenen Signalen vorzunehmen.

## Claims

1. A method for synchronizing base stations (16a, 16b) of a network (21) of terrestrial cellular telecommunications, the network comprising at least asynchronous first and second base stations (16a, 16b), **characterized in that** the method comprises the following steps:
- a step of transmitting, by said first and second base stations (16a, 16b), to a telecommunications satellite (17), a first message, and respectively a second message, respectively comprising a first frame synchronization word, and respectively a second frame synchronization word,
- a step of retransmitting, by the satellite to a processing device (19) on the ground, said first and second messages, the satellite and the processing device being synchronous with a reference time system (GPS),
the following steps being performed within the processing device:
- a step of searching for the first synchronization word sent in the message by the first base station (16a),
- a step of searching for the second synchronization word sent in the message by the first base station (16b),
- a step of apparent dating T_{16a-Receipt} of the first synchronization word, and of apparent dating T_{16b}-_{Receipt} of the second synchronization word,
- a step of computing the distance between the first base station (16a) and the satellite (17), the processing device (19) knowing the position of the first base station [16a] and the position of the satellite (17),
- a step of computing the distance between the second base station (16a) and the satellite (17), the processing device (19) knowing the position of the second base station [16a] and the position of the satellite (17),
- a step of computing, by deducing the distance computed between the first base station (16a) and the satellite (17), the travel time T_{16a-Travel} to the satellite (17) of the first synchronization word (16a), and of computing, by deducing the distance computed between the second base station (16b) and the satellite (17), the travel time T_{16b-Travel} of the second synchronization word (16b),
- a step of computing the actual dating of the first synchronization word (16a) and the actual dating of the second synchronization word (16b), respectively based on the formula T₁₆ₐ = T_{16a-Receipt} - T_{16a-Travel,} and T_{16b} = T_{16b-Receipt} - T_{16b-Travel},
- a step of transmitting information that takes into account said actual datings to a synchronization device (20) of the cellular telecommunications network.

2. A method according to claim 1, **characterized in that** it comprises a step of transmitting, by the synchronization device (20) of the cellular telecommunications network, to a terminal (23), the information that takes into account said actual datings between visible base stations (16a, 16b) from the terminal, enabling it to perform triangulation on the signals emanating from those stations.
